# EUROPÄISCHE PATENTSCHRIFT

(11) **EP 4 260 437 B1**
(45) Veröffentlichungstag und Bekanntmachung des Hinweises auf die Patenterteilung: **10.07.2024**
(21) Anmeldenummer: 21786420.6
(22) Anmeldetag: 30.09.2021
(51) Int. Cl.: H02K 1/22, H02K 1/24, H02K 1/32

(54) **ROTORKRANZ FÜR EINE ELEKTRISCHE MASCHINE**
ROTOR RIM FOR AN ELECTRIC MACHINE
REBORD DE ROTOR POUR MACHINE ÉLECTRIQUE

(30) Priorität: 14.12.2020 DE 102020133287
(43) Veröffentlichungstag der Anmeldung: 18.10.2023
(73) Patentinhaber: Voith Patent GmbH, 89522 Heidenheim (DE)
(72) Erfinder: STEEGMAIER, Jonas, 89173 Lonsee (DE); LUDWIG, Daniel, 89542 Herbrechtingen (DE)
(74) Vertreter: Voith Patent GmbH - Patentabteilung
(86) Internationale Anmeldenummer: PCT/EP2021/076946
(87) Internationale Veröffentlichungsnummer: WO 2022/128192

(56) Entgegenhaltungen:
- CN-A- 101 752 917
- CN-A- 109 921 526
- JP-A- 2013 236 499

## Beschreibung

Die Erfindung betrifft einen Rotor für eine rotierende elektrische Maschine. Dabei ist der Rotor als Schenkelpolläufer ausgebildet. Bei der elektrischen Maschine kann es sich um einen Generator, Motor oder Motor-Generator handeln.

Schenkelpolläufer werden gewöhnlich aus massivem Stahl gebaut und haben ausgeprägte Polschuhe, auf denen sich die Erregerwicklung befindet. Bei größeren Maschinen werden die Polschuhe meistens mittels ein oder mehreren hammerkopfartigen Nuten an einer massiven Nabe befestigt.

Für große Maschinen ist auch eine Anordnung bekannt geworden, bei der der Rotor aus einem Rotorkranz und einer Trägerstruktur besteht, wobei der Rotorkranz mittels der Trägerstruktur mit der Welle verbunden ist. Eine solche Anordnung offenbart die CN 101752917 B. Der Rotorkranz ist dabei aus mehreren übereinandergeschichteten Ringscheiben aufgebaut. Zwischen den Ringscheiben sind Stützböcke (Nr. 8 in den Zeichnungen) und Lüftungsleitbleche (Nr. 7 in den Zeichnungen) angeordnet.

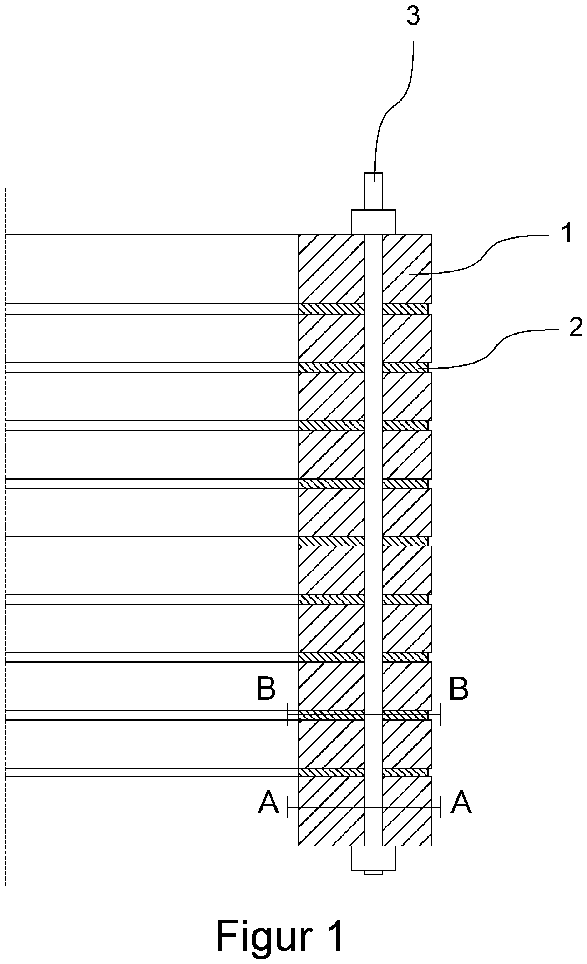

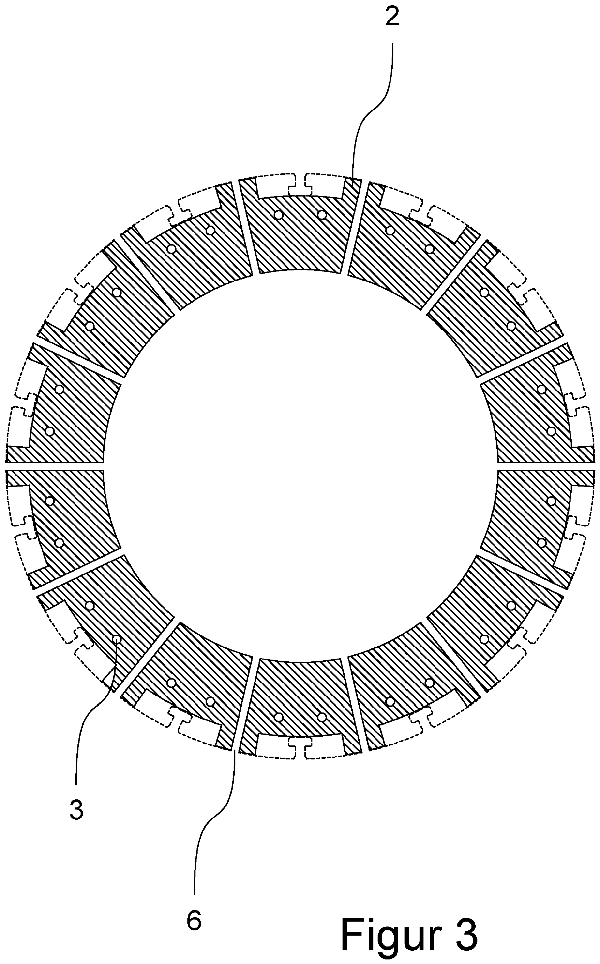

Eine weitere solche Anordnung offenbart die CN 109921526 B, bei der die Lüftungsleitbleche zweitteilig ausgeführt (Nr. 9 und 10 in Figur 1) sind, und wobei jeweils ein Teil eines Lüftungsleitbleches mit dem benachbarten Ringscheiben durch Schweißen verbunden ist. Zur Ausrichtung der Lüftungsleitbleche dienen dabei polygonale Nuten (Nr. 13 in Figur 3) und Vorsprünge (Nr. 14 in Figur 3) in den benachbarten Ringscheiben.

Die Aufgabe der Erfindung ist es, eine alternative Ausführungsform eines Rotorkranzes für eine elektrische Maschine anzugeben.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Im Folgenden wird die Erfindung anhand von Figuren erläutert. Die Figuren zeigen im Einzelnen:
- Fig.1: Achsparallel Schnitt durch einen erfindungsgemäßen Rotorkranz
- Fig.2: Schnitt senkrecht zur Achse des Rotorkranzes aus Fig. 1 entlang A-A
- Fig. 3: Schnitt senkrecht zur Achse des Rotorkranzes aus Fig. 1 entlang B-B
- Fig. 4: Zwischenringelement in vergrößerter Ansicht
- Fig. 5a: Zwischenringelement in vergrößerter Ansicht
- Fig. 5b: Zwischenringelement in vergrößerter Ansicht
- Fig. 6: Schnitt durch ein Zwischenringelement entlang C-C
- Fig. 7: Schnitt durch ein Zwischenringelement entlang C-C in einer weiteren Ausführungsform
- Fig. 8: Detail eines erfindungsgemäßen Rotorkranzes mit Bremsscheibe

Figur 1 zeigt einen achsparallelen Schnitt durch einen erfindungsgemäßen Rotorkranz in schematischer Darstellung. Der Rotorkranz umfasst wenigstens zwei massive Ringscheiben, von denen eine mit 1 bezeichnet ist. Zwei der Ringscheiben 1 liegen dabei in axialer Richtung außen und eine beliebige Anzahl (inklusive Null) von Ringscheiben 1 zwischen den beiden äußeren Scheiben. Die Drehachse des Rotorkranzes ist durch die gestrichelte Linie links angedeutet. Die Ringscheiben 1 werden durch eine Vielzahl von axial verlaufenden Zugbolzen zusammengespannt, von denen einer dargestellt und mit 3 bezeichnet ist.

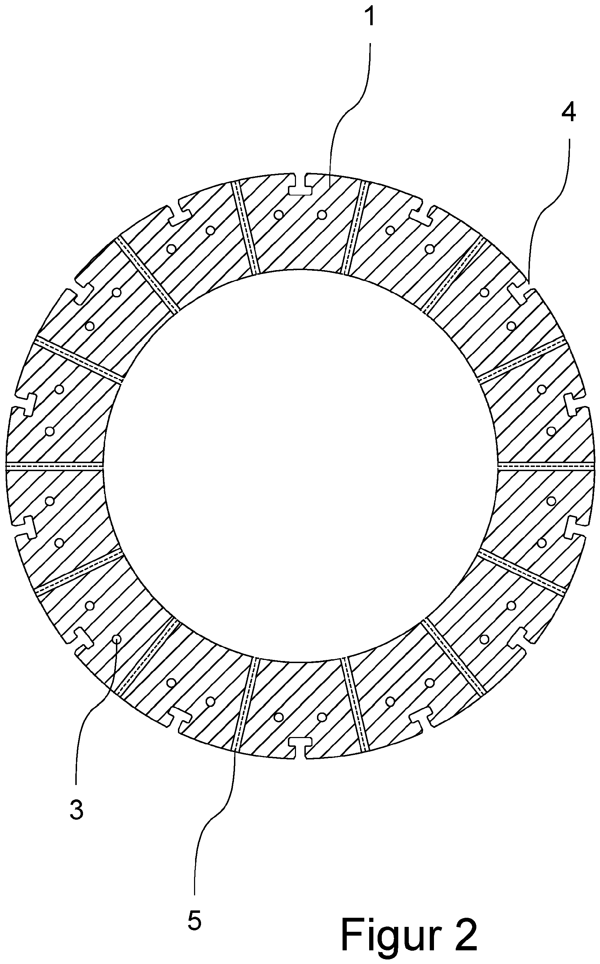

Figur 2 zeigt in schematischer Darstellung einen Schnitt senkrecht zur Achse durch den Rotorkranz von Figur 1 entlang der Linie A-A. Die Figur zeigt einen der massiven Ringscheiben 1. Am äußeren Umfang der Ringscheiben 1 sind hammerkopfartige Nuten angeordnet, welche zur Aufnahme der Rotorpole dienen und von denen eine mit 4 bezeichnet ist. Die Nuten können auch anders geformt sein, z.B. als Schwalbenschwänze oder Ähnliches. Auch können mehrere solche Nuten für die Aufnahme je eines Poles vorgesehen sein. Der in Figur 2 dargestellte Rotorkranz ist für die Aufnahme von 14 Rotorpolen ausgebildet. Es kommen jedoch alle geraden Zahlen für die Anzahl von aufzunehmenden Rotorpolen in Frage. In der in Figur 2 dargestellten Ausführungsform sind zwei Zugbolzen 3 pro Pol vorgesehen. Es können auch mehr als zwei Zugbolzen 3 pro Pol vorgesehen sein. In Figur 2 sind die Zugbolzen 3 alle auf ein und demselben Teilkreis um die Drehachse des Rotorkranzes angeordnet. Die Zugbolzen 3 können auch auf mehreren Teilkreisen mit unterschiedlichen Radien angeordnet sein.

Figur 2 zeigt optionale Lüftungsbohrungen, welche sich von der Innenseite der Ringscheibe 1 bis zur Außenseite derselben erstrecken. Einer dieser Lüftungsbohrungen ist mit 5 bezeichnet. Außen münden die optionalen Lüftungsbohrungen 5 an Stellen, die sich zwischen den Polen befinden. In Figur 2 ist je eine Lüftungsbohrung 5 zwischen zwei Polen vorgesehen. Es können auch mehrere sein. Wenn mehrere Lüftungsbohrungen 5 zwischen je zwei Polen vorgesehen sind, dann können diese in axialer Richtung übereinander liegen oder, in der in Figur 2 dargestellten Ebene, nebeneinander angeordnet sein. Die in Figur 2 dargestellten Lüftungsbohrungen 5 verlaufen in radialer Richtung. Sie könnten auch anders verlaufen, z.B. zu einem Radius parallelversetzt. In jedem Fall sind die Lüftungsbohrungen 5 so angeordnet, dass Luft vom Inneren des Rotorkranzes durch die Lüftungsbohrungen 5 in den Raum zwischen zwei Polen gelangen kann. Wie gesagt sind die Lüftungsbohrungen 5 optional. Es können sich solche Lüftungsbohrungen 5 auch nur in einem Teil der Ringscheiben 1 befinden, beispielsweise nur in den beiden in axialer Richtung außen gelegenen Ringscheiben.

Als Ausgangsmaterial für die Ringscheiben 1 kommen Stahlplatten bzw. geschmiedete Stahlringe in Frage.

Figur 3 zeigt in schematischer Darstellung einen Schnitt senkrecht zur Rotationsachse durch den Rotorkranz von Figur 1 entlang der Linie B-B. Wie aus der Lage der Linie B-B in Figur 1 hervorgeht, befindet sich die in Figur 3 dargestellte Anordnung zwischen zwei Ringscheiben 1. Die in Figur 3 dargestellte Anordnung umfasst eine Anzahl von Zwischenringelementen, von denen eines mit 2 bezeichnet ist. Pro Pol umfasst die Anordnung gemäß Figur 3 genau ein Zwischenringelement 2. Zur Verdeutlichung der Lage der Zwischenringelemente 2 ist die Außenkontur einer Ringscheibe 1 in Figur 3 durch die gestrichelte Linie angedeutet. Von außen betrachtet ist also je ein Zwischenringelement 2 radial hinter dem zugehörigen Pol angeordnet. Der vorhergehende Satz bezieht sich natürlich nur auf eine Lage von Zwischenringelemente 2 wie in Figur 3 dargestellt. Da erfindungsgemäß jeweils zwischen zwei benachbarten Ringscheiben 1 eine solche Lage Zwischenringelemente 2 angeordnet ist, befindet sich radial hinter jedem Pol N-1 Zwischenringelemente, wenn N die Anzahl der Ringscheiben 1 ist, aus denen sich der Rotorkranz zusammensetzt. Jedes Zwischenringelement 2 wird von wenigstens zwei Zugbolzen 3 durchdrungen. Die Zwischenringelemente 2 sind so angeordnet, dass dieselben in tangentialer Richtung nicht direkt aneinanderstoßen, sondern dass sich dort jeweils ein offener Zwischenraum befindet. Die so gebildeten Zwischenräume stellen Lüftungskanäle dar, von denen einer mit 6 bezeichnet ist.

Die Zwischenringelemente 2 erfüllen eine zweifache Funktion: Zum einen stellen sie Abstandshalter zwischen je zwei in axialer Richtung benachbarten Ringscheiben 1 dar, und zum anderen bilden sie mit ihren lateralen zu den benachbarten Zwischenringelementen 2 ausgerichteten Außenkonturen die lateralen Wände der Lüftungskanäle 6. Die axial orientierten Wände der Lüftungskanäle 6 werden dabei von den benachbarten Ringscheiben 1 gebildet.

Die in Figur 3 dargestellten Zwischenringelemente 2 haben im Wesentlichen die Form von Kreisringsegmenten. An der radial außen gelegenen Seite weichen sie von dieser Form dadurch ab, dass sie im Bereich des zugehörigen Pols eine Aussparung aufweisen, so dass die Kontur der Zwischenringelemente 2 in diesem Bereich nicht der Außenkontur der Ringscheiben folgt. Die Aussparungen bieten den Vorteil einer leichteren Fertigbarkeit, da so die Nuten zur Aufnahme der Pole nicht in den Zwischenringelementen ausgeführt werden müssen. Außerdem führen die Aussparungen zu einer Gewichtsersparnis. Die Zwischenringelemente 2 könnten aber auch noch auf andere Weise von der Form von Kreisringsegmenten abweichen. Beispielsweise könnte die Außenkontur der Zwischenringelemente 2, welche die lateralen Wände der Lüftungskanäle 6 bilden so verlaufen, dass die Breite der Lüftungskanäle von radial innen nach radial außen hin abnimmt, so dass die durchströmende Luft nach außen hin an Strömungsgeschwindigkeit zunimmt. Oder die besagten Außenkonturen könnten von der geraden Form abweichen, so dass der beschriebene Verlauf der lateralen Wände zusätzlich geschwungen ist. Außerdem könnten die Ecken der Zwischenringelemente 2 abgerundet sein. Die Zwischenringelemente 2 können am Außen- und/oder Innendurchmesser Flächen zur Verbesserung der Erstmontage aufweisen.

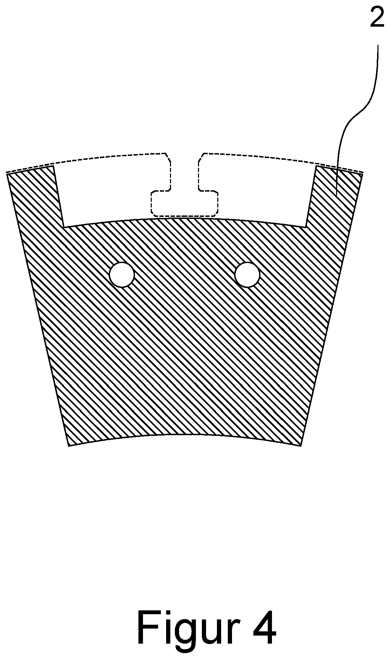

Figur 4 zeigt ein Zwischenringelement 2 in einer vergrößerten Ansicht. Die in Figur 4 dargestellte Ausbildung des Zwischenringelementes 2 ist dabei als optional zu betrachten. Das dargestellte Zwischenringelement 2 ist in den Bereichen, in denen es der Außenkontur der Ringscheiben folgt, gegenüber dieser gestrichelt dargestellten Außenkontur geringfügig zurückversetzt. Die Einbaulage der Zwischenringelemente 2 wird durch die Fluchtung der Bohrungen für die Zugbolzen 3 und/oder mögliche bearbeitete Flächen am Innen- und Außendurchmesser bestimmt. Damit die Zugbolzen 3 problemlos eingeführt werden können, ist jedoch ein gewisses Übermaß der entsprechenden Bohrungen unvermeidlich. Dadurch ergibt sich wiederrum ein gewisses Spiel für die Lage der Zwischenringelemente 2. Beim Einbau werden dieselben so ausgerichtet, dass die Innenkontur der Zwischenringelemente 2 mit den Ringscheiben fluchtet. Durch das Untermaß an der Außenseite wird vermieden, dass, wenn sich die Zwischenringelemente 2 während dem Betrieb der elektrischen Maschine durch die Fliehkraft nach außen verschieben sollten, dieselben an der Außenseite nicht über die Außenkontur der Ringscheiben hinausragen können. D.h. das besagte Untermaß muss wenigstens so groß sein wie das Spiel der Bohrungen in Bezug auf die Zugbolzen 3.

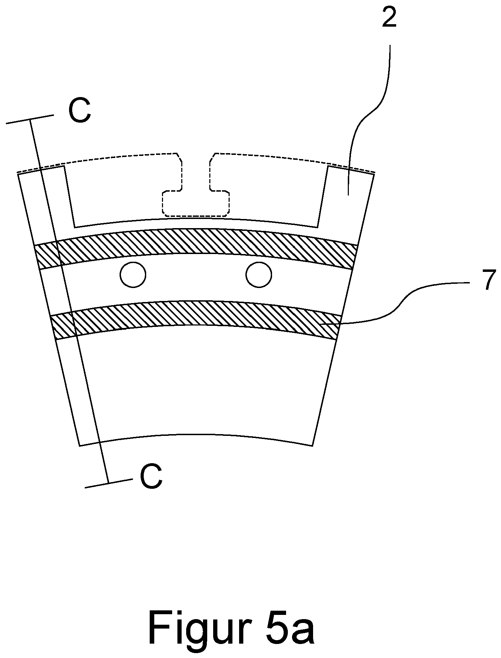

Figur 5a zeigt ein weiteres Detail eines erfindungsgemäßen Zwischenringelementes 2. Die erfindungsgemäßen Zwischenringelemente 2 liegen an den benachbarten Ringscheiben 1 nur mit einem Teil ihrer axial orientierten Oberfläche an. In Figur 5a ist der an die Ringscheiben 1 anliegende Teil der axial orientieren Oberfläche schraffiert dargestellt. In der dargestellten Ausführungsform sind das zwei Kreisringsegmente, wobei ein Kreisringsegment radial außerhalb und das andere radial innerhalb der Bohrungen für die Zugbolzen 3 angeordnet ist. Die gezeigte Ausformung des anliegenden Teilbereichs der axial orientierten Oberfläche stellt dabei nur eine von vielen Möglichkeiten dar.

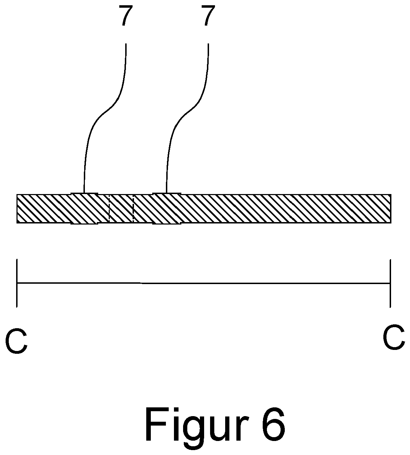

Figur 6 zeigt einen Schnitt durch das in Figur 5a dargestellte Zwischenringelement 2 in einem Schnitt entlang der Linie C-C. Daraus geht hervor, dass der anliegende Teilbereich 7 erhaben gegenüber der restlichen axial orientierten Oberfläche des Zwischenringelementes 2 ausgeführt ist, und dass die oben und unten gelegenen jeweils an die entsprechenden Ringscheiben 1 anliegenden Teilbereiche 7 sich in axialer Richtung gegenüberliegen.

Dass die Zwischenringelemente 2 mit nur einen Teil 7 ihrer Oberfläche an den benachbarten Ringscheiben 1 anliegen, hat den Vorteil, dass nur in diesem Teil 7 die Oberfläche den vorgeschriebenen Ebenheitstoleranzen genügen muss, während der nicht anliegende Teil der Oberfläche weniger genau gefertigt werden kann.

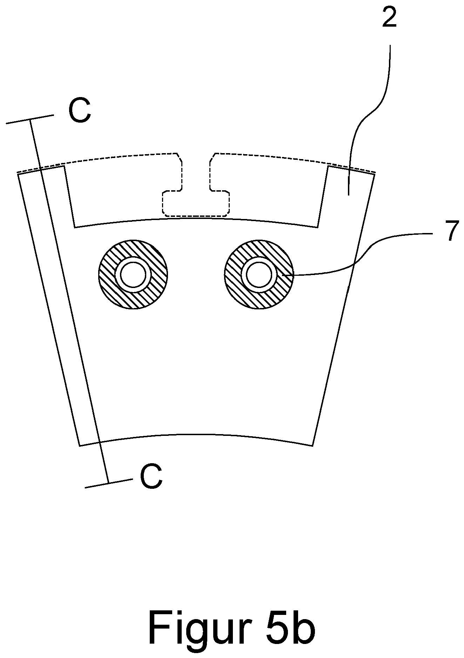

Alternative Ausgestaltungen der anliegenden Teiloberfläche 7 zu der in Figur 5a und 6 gezeigten Form, könnten beispielsweise in mehreren kreisförmigen, ovalen, rechteckigen oder anders geformten Teilflächen bestehen, welche in beliebiger Anzahl und Mischung um die Bohrungen für die Zugbolzen 3 herum angeordnet sind. Figur 5b zeigt eine solche alternative Ausgestaltung in Form von um die Bohrungen herum verlaufenden Kreisringen.

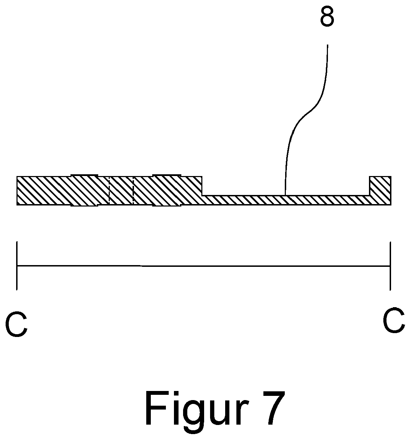

Figur 7 zeigt ein weiteres optionales Merkmal eines Zwischenringelementes 2 in derselben Darstellungsweise wie Figur 6. Die in axialer Richtung angeordnete Oberfläche des Zwischenringelementes 2 weist eine Aussparung auf, welche mit 8 bezeichnet ist. Die Aussparung 8 gehört offensichtlich nicht dem Teil der Oberfläche an, welche an die benachbarten Ringscheiben 1 angrenzt. Der Vorteil der optionalen Aussparung 8 besteht in einer Gewichtseinsparung. Der Vorteil stellt sich bereits ein, wenn nur ein Teil der Zwischenringelemente 2 eine solche Aussparung 8 aufweisen.

Als Ausgangsmaterial für die Zwischenringelemente 2 kommt Stahl oder Aluminium in Frage.

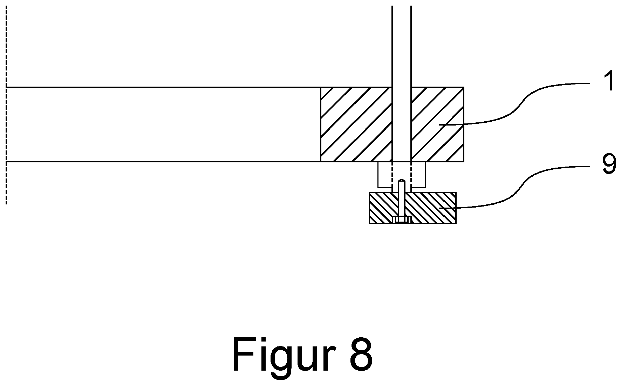

Figur 8 zeigt ein Detail eines erfindungsgemäßen Rotorkranzes mit einer Bremsscheibe, welche mit 9 bezeichnet ist. Die Bremsscheibe 9 ist dabei vorteilhaft direkt auf den Stirnseiten der Zugbolzen 3 angeordnet und mit Schrauben, die in die Zugbolzen 3 eingreifen, befestigt. Alternativ kann die Bremsscheibe auch an der Rotor-Trägerstruktur befestigt sein. Die dargestellte Ausführungsform ist dabei für einteilige Bremsscheiben geeignet. Wenn eine segmentierte ausgeführte Bremsscheibe zum Einsatz kommen soll, dann kann eine Trägerscheibe wie in Figur 8 dargestellt montiert werden, wobei die Bremsscheibensegmente dann mit weiteren Schrauben auf die Trägerscheibe geschraubt werden.

Abschließend ist zu bemerken, dass die Ringscheiben 1 alle dieselbe axiale Dicke aufweisen können, oder dass die einzelnen Ringscheiben unterschiedliche axiale Dicken haben können. In der in Figur 1 dargestellten Ausführungsform haben beispielsweise die axial außen liegenden Ringscheiben eine größer axiale Dicke als die innen liegenden Ringscheiben. Diese konkrete Ausführungsform ermöglicht in vorteilhafter Weise den Anbau von diversen an den axialen Enden des Rotors gelegenen Teilen, welche in Figur 1 nicht dargestellt sind. Im Allgemeinen ist es vorteilhaft, wenn die axiale Dicke der Ringscheiben, der jeweils an der betreffenden Stelle auftretenden Belastung angepasst ist, d.h. je höher die ortsspezifische Belastung, desto größer die axiale Dicke der dort angeordneten Ringscheiben.

### Bezugszeichenliste

- 1: Ringscheibe
- 2: Zwischenringelement
- 3: Zugbolzen
- 4: Nut zur Aufnahme eines Rotorpoles
- 5: Lüftungsbohrung
- 6: Lüftungskanal
- 7: Anlagefläche
- 8: Aussparung
- 9: Bremsscheibe

## Patentansprüche

1. Rotorkranz für eine elektrische Maschine mit wenigstens zwei massiven Ringscheiben (1), wobei zwei der Ringscheiben (1) in axialer Richtung außen und eine beliebige Anzahl von Ringscheiben (1) zwischen den äußeren Ringscheiben (1) angeordnet sind, und mit einer Vielzahl von axial verlaufenden Zugbolzen (3), welche die Ringscheiben (1) miteinander verbinden, wobei am äußeren Umfang der Ringscheiben (1) Nuten zur Aufnahme von einer Anzahl von Rotorpolen angeordnet sind, und wobei pro Rotorpol wenigstens zwei Zugbolzen (3) vorgesehen sind, und wobei jeweils zwischen zwei benachbarten Ringscheiben (1) eine Lage von Zwischenringelementen (2) angeordnet ist, wobei jede Lage genau ein Zwischenringelement (2) pro Rotorpol umfasst, und wobei die Zwischenringelemente (2) so angeordnet sind, dass zwischen je zwei in Umfangsrichtung benachbarten Zwischenringelementen (2) ein Lüftungskanal (6) gebildet wird, welcher sich vom Innern des Rotorkranzes bis zum äußeren Umfang des Rotorkranzes erstreckt und dort im zwischen den Rotorpolen gelegenen Raum mündet, wobei jedes Zwischenringelement (2) von wenigstens zwei Zugbolzen (3) durchdrungen wird, **dadurch gekennzeichnet, dass** jedes Zwischenringelement (2) nur mit einem Teil (7) seiner axial orientierten Oberfläche an den jeweils benachbarten Ringscheiben (1) anliegt, wobei der anliegende Teil (7) der axial orientierten Oberfläche jeweils erhaben gegenüber dem restlichen Teil der axial orientierten Oberfläche desselben Zwischenringelementes (2) ausgebildet ist.

2. Rotorkranz nach Anspruch 1, wobei wenigstens ein Teil der Ringscheiben (1) Lüftungsbohrungen (5) aufweist, welche sich vom Innern des Rotorkranzes bis zum äußeren Umfang des Rotorkranzes erstrecken und dort jeweils im zwischen den Rotorpolen gelegenen Raum münden.

3. Rotorkranz nach Anspruch 1 oder 2, wobei die Zwischenringelemente (2) jeweils die Form eines Kreisringsegmentes aufweisen und an der außen gelegenen Kontur im Bereich der Nuten zur Aufnahme der Rotorpole eine Aussparung aufweisen und in diesem Bereich wenigstens teilweise nicht der Außenkontur der Ringscheiben (1) folgen.

4. Rotorkranz nach einem der vorherigen Ansprüche, wobei wenigstens ein Teil der Zwischenringelemente (2) so ausgebildet ist, dass die in axialer Richtung angeordnete Oberfläche dieser Zwischenringelemente (2) eine Aussparung aufweist.

5. Rotorkranz nach einem der vorherigen Ansprüche, wobei der Rotorkranz eine Bremsscheibe (9) umfasst, und wobei die Bremsscheibe (9) direkt auf den Stirnseiten der Zugbolzen (3) angeordnet und mit Schrauben, die in die Zugbolzen (3) eingreifen, befestigt ist.

6. Rotorkranz nach einem der Ansprüche 1 bis 4, wobei der Rotorkranz eine Trägerscheibe und eine segmentierte Bremsscheibe (9) umfasst, und die Trägerscheibe direkt auf den Stirnseiten der Zugbolzen (3) angeordnet und mit Schrauben, die in die Zugbolzen (3) eingreifen, befestigt ist, und wobei die Segmente der Bremsscheibe (9) mit der Trägerscheibe durch Schauben verbunden sind.

7. Rotorkranz nach einem der vorherigen Ansprüche, wobei die Ringscheiben (1) alle dieselbe axiale Dicke aufweisen.

8. Rotorkranz nach einem der Ansprüche 1 bis 6, wobei die Ringscheiben (1) unterschiedliche axiale Dicken aufweisen.

9. Rotorkranz nach dem vorhergehenden Anspruch, wobei die axial außen liegenden Ringscheiben (1) eine größer axiale Dicke aufweisen, als die axial innen liegenden Ringscheiben (1).

## Claims

1. Rotor rim for an electric machine with at least two solid ring discs (1), wherein two of the ring discs (1) are arranged on the outside in the axial direction and any number of ring discs (1) are arranged between the outer ring discs (1), and with a plurality of axially extending tension bolts (3) which connect the ring discs (1) to one another, wherein grooves for receiving a number of rotor poles are arranged on the outer circumference of the ring discs (1), and wherein at least two tension bolts (3) are provided per rotor pole, and wherein a layer of intermediate ring elements (2) is arranged in each case between two adjacent ring discs (1), wherein each layer comprises exactly one intermediate ring element (2) per rotor pole, and wherein the intermediate ring elements (2) are arranged in such a way that a ventilation duct (6) is formed between each two intermediate ring elements (2) adjacent in the circumferential direction, which ventilation duct extends from the interior of the rotor rim to the outer circumference of the rotor rim and opens there in the space located between the rotor poles, wherein each intermediate ring element (2) is penetrated by at least two tension bolts (3), **characterised in that** each intermediate ring element (2) bears with only a part (7) of its axially oriented surface against the respective adjacent ring discs (1), wherein the bearing part (7) of the axially oriented surface is in each case raised relative to the remaining part of the axially oriented surface of the same intermediate ring element (2).

2. A rotor rim according to claim 1, wherein at least a part of the ring discs (1) has ventilation holes (5) which extend from the interior of the rotor rim to the outer circumference of the rotor rim and open there in each case in the space located between the rotor poles.

3. Rotor rim according to claim 1 or 2, wherein the intermediate ring elements (2) each have the shape of a circular ring segment and have a recess on the outer contour in the region of the grooves for receiving the rotor poles and in this region at least partially do not follow the outer contour of the ring discs (1).

4. Rotor rim according to one of the previous claims, wherein at least a part of the intermediate ring elements (2) is designed such that the surface of these intermediate ring elements (2) arranged in the axial direction has a recess.

5. Rotor rim according to one of the previous claims, wherein the rotor rim comprises a brake disc (9), and wherein the brake disc (9) is arranged directly on the end faces of the tension bolts (3) and is fastened with screws which engage in the tension bolts (3).

6. Rotor rim according to one of claims 1 to 4, wherein the rotor rim comprises a carrier disc and a segmented brake disc (9), and the carrier disc is arranged directly on the end faces of the tension bolts (3) and is fastened by screws which engage in the tension bolts (3), and wherein the segments of the brake disc (9) are connected to the carrier disc by screws.

7. Rotor rim according to one of the previous claims, wherein the ring discs (1) all have the same axial thickness.

8. The rotor rim according to any one of claims 1 to 6, wherein the ring discs (1) have different axial thicknesses.

9. Rotor rim according to the preceding claim, wherein the axially outer ring discs (1) have a greater axial thickness than the axially inner ring discs (1).

## Revendications

1. Couronne de rotor pour une machine électrique avec au moins deux disques annulaires massifs (1), deux des disques annulaires (1) étant disposés à l'extérieur en direction axiale et un nombre quelconque de disques annulaires (1) étant disposé entre les disques annulaires extérieurs (1), et avec une pluralité de boulons de traction (3) s'étendant axialement, qui relient les disques annulaires (1) entre eux, dans lequel des rainures destinées à recevoir un certain nombre de pôles de rotor sont disposées sur le pourtour extérieur des rondelles circulaires (1), et dans lequel au moins deux boulons de traction (3) sont prévus par pôle de rotor, et dans lequel une couche d'éléments de bague intermédiaire (2) est disposée respectivement entre deux rondelles circulaires (1) voisines, chaque couche comprenant exactement un élément de bague intermédiaire (2) par pôle de rotor, et les éléments de bague intermédiaire (2) étant disposés de manière à former entre deux éléments de bague intermédiaire (2) voisins dans la direction périphérique un canal de ventilation (6) qui s'étend de l'intérieur de la couronne du rotor jusqu'à la périphérie extérieure de la couronne du rotor et y débouche dans l'espace situé entre les pôles du rotor, chaque élément de bague intermédiaire (2) étant traversé par au moins deux boulons de traction (3), **caractérisé en ce que** chaque élément de bague intermédiaire (2) s'appuie seulement par une partie (7) de sa surface orientée axialement sur les rondelles (1) respectivement voisines, la partie (7) adjacente de la surface orientée axialement étant respectivement réalisée en relief par rapport à la partie restante de la surface orientée axialement du même élément de bague intermédiaire (2).

2. Couronne de rotor selon la revendication 1, dans laquelle au moins une partie des rondelles circulaires (1) présente des trous de ventilation (5) qui s'étendent depuis l'intérieur de la couronne de rotor jusqu'à la périphérie extérieure de la couronne de rotor et y débouchent respectivement dans l'espace situé entre les pôles du rotor.

3. Couronne de rotor selon la revendication 1 ou 2, dans laquelle les éléments de bague intermédiaire (2) ont chacun la forme d'un segment d'anneau circulaire et présentent un Encoche sur le contour situé à l'extérieur dans la zone des rainures destinées à recevoir les pôles du rotor et ne suivent pas, au moins partiellement, le contour extérieur des rondelles circulaires (1) dans cette zone.

4. Couronne du rotor selon l'une quelconque des revendications précédentes, dans laquelle au moins une partie des éléments de bague intermédiaire (2) est configurée de telle sorte que la surface de ces éléments de bague intermédiaire (2) disposée dans la direction axiale présente une encoche.

5. Couronne de rotor selon l'une quelconque des revendications précédentes, dans laquelle la couronne de rotor comprend un disque de frein (9), et dans laquelle le disque de frein (9) est disposé directement sur les faces frontales des boulons de traction (3) et est fixé par des vis qui s'engagent dans les boulons de traction (3).

6. Couronne de rotor selon l'une quelconque des revendications 1 à 4, dans laquelle la couronne de rotor comprend un disque de support et un disque de frein segmenté (9), et le disque de support est disposé directement sur les faces frontales des boulons de traction (3) et est fixé par des vis qui s'engagent dans les boulons de traction (3), et dans laquelle les segments du disque de frein (9) sont reliés au disque de support par des vis.

7. Couronne du rotor selon l'une quelconque des revendications précédentes, dans laquelle les rondelles circulaires (1) ont toutes la même épaisseur axiale.

8. Couronne du rotor selon l'une des revendications 1 à 6, dans laquelle les rondelles circulaires (1) présentent des épaisseurs axiales différentes.

9. Couronne du rotor selon la revendication précédente, dans laquelle les rondelles circulaires (1) situées axialement à l'extérieur ont une épaisseur axiale supérieure à celle des rondelles circulaires (1) situées axialement à l'intérieur.
